Europäisches Patentamt

European Patent Office

Office européen des brevets

(11) Publication number: **0 394 174**
**A2**

# EUROPEAN PATENT APPLICATION

(21) Application number: **90480062.0**

(22) Date of filing: **20.04.90**

(51) Int. Cl.5: **G06F 15/16, G06F 11/00, H04L 12/26**

(30) Priority: **21.04.89 US 341346**

(43) Date of publication of application:
**24.10.90 Bulletin 90/43**

(84) Designated Contracting States:
**DE FR GB**

(71) Applicant: **International Business Machines Corporation**
**Old Orchard Road**
**Armonk, N.Y. 10504(US)**

(72) Inventor: **Ashfield, James Currie**
**8612 Woodlawn Drive**
**Raleigh - NC 27613(US)**
Inventor: **Cybrynski, Donna Beatty**

**710 Trappers Run Drive**
**Cary-NC 27513(US)**
Inventor: **Ballard, Christopher Paul**
**Via Odoardo Beccari**
**60015 Rome(IT)**
Inventor: **Raynes, Jeffrey Alan**
**2412-B Everett Avenue**
**NC 27607 - Raleigh NC(US)**
Inventor: **Sultan, Aaron Thomas**
**122 Frair Lane**
**Carrboro, NC 27510(US)**

(74) Representative: **Bonneau, Gérard**
**Compagnie IBM France Département de Propriété Intellectuelle**
**F-06610 La Gaude(FR)**

(54) **System and method for reporting message format errors in a format independent manner.**

(57) Nodes (10, 12, 14) in a data communication network exchange data in the form of data messages. The data messages may be hierarchical structures with one or more levels of parent and child structures. A message received at a network node (10, 12, 14) may be tested for format errors. Any node which performs such a function contains a stored format definition table for each message expected to be received. The table sets for the hierarchy of the various structures in the message and sets forth allowable parameters for each of those structures. A received message is decomposed into its structures using general purpose parsing logic. Each structure is analyzed against the stored definition for the structure. Format errors are reported using a general purpose report format which contains both an error code indicating the kind of error found and a structure report which identifies the hierarchy of the structure at which the error was found.

FIG. 1

EP 0 394 174 A2

# SYSTEM AND METHOD FOR REPORTING MESSAGE FORMAT ERRORS IN A FORMAT-INDEPENDENT MANNER

The present invention relates to data communication networks and more particularly to a system and method for testing messages sent through such networks for format errors and for reporting format errors independently of the format of the particular message tested.

For purposes of the following description, a communication network can generally be defined as a collection of network nodes and end nodes interconnected through communications links. A network node can be characterized as a data processing system that provides certain functions within the network, such as the routing of messages between itself and its adjacent or neighboring nodes, the selection of routes for messages to be transmitted between two nodes and the furnishing of directory services to connected end nodes. The link between nodes may be a permanent communications link, such as a conventional cable, or a temporary link that is enabled only when needed. A dial-up telephone connection is an example of such a temporary link. End nodes are exemplified by devices such as display terminals, intelligent workstations, printers, and the like, which do not provide routing or route selection or directory services to other nodes in the network. Collectively, the network nodes, the end nodes and the links between the nodes are referred to as network resources. The physical configuration and characteristics of the various nodes and links in a network are said to be the topology of the network.

The terms used above and other terms that may be used from time to time are explained in greater detail in a number of generally available publications. Such publications include: (1) Systems Network Architecture, Concepts and Products, IBM Publication GC30-3072-3, Copyright International Business Machines Corporation 1986; (2) Systems Network Architecture, Technical Overview, IBM Publication GC30-3073-2, Copyright International Business Machines Corporation, September 1986; (3) Systems Network Architecture, Transaction Programmer's Reference Manual for LU Type 6.2, IBM Publication GC30-3084-2, Copyright International Business Machines November 1985 ; and (4) Systems Network Architecture Format and Protocol Reference Manual : Architecture Logic for LU Type 6.2, IBM Publication SC30-3269-3, Copyright International Business Machines Corporation, December 1985.

The above publications contain a wealth of information about terms which appear in the following description. The publications are not, however, essential to an understanding of the present invention.

In computer networks adhering to Systems Network Architecture, data is transmitted between nodes in the form of messages. Each message normally includes a number of fields, each having data of a specific type. The various fields in a message are usually self-defining. That is, fields or groups of fields are preceded by a two-byte identifier known as a Generalized Data Stream (GDS) codepoint. GDS codepoints are published in the format and protocol reference manuals, such as the Manual identified earlier.

In GDS formats, fields and groupings of fields are known as structures. Structures, which are any message element identified by a recognized type of header (discussed below), are categorized in terms of their hierarchical position, the method by which their beginning and endings are determined and the kind of header used to identify them.

With reference to hierarchical position, a structure may be parent, child or atomic. A parent structure is any structure which includes other (child) structures. A child structure is any structure which is included within another (parent) structure. An atomic structure is any structure that consists of only its own header followed by data. Given these definitions, it should be recognized that any particular non-atomic structure may concurrently be both a parent structure (to one or more included child structures) and a child structure (to an including parent structure).

For SNA messages, certain parent-child relationships must be defined. The relationships relate to the order (if any) in which child structures must appear in a parent structure and to the number of children, of the same or different types, allowable within a given parent structure.

A parent structure is defined as having either ordered or unordered child structures. Ordered child structures must occur in the parent structure in a predetermined order. Unordered child structures may appear in the parent structure in any order.

The number of child structures within a parent structure may range from a required minimum to an allowed maximum. The minimum and maximum numbers of different types of child structures allowed within a given parent structure are ordinarily specified. Similarly, the minimum and maximum numbers of allowable child structures of a particular type are ordinarily specified.

Several methods exist for determining the beginning and endings of structures. Structures may be length-bounded or have boundaries that are delimited or implied.

A length-bounded structure normally consists of a header followed by data, possibly including child structures. A header may be categorized either as an LT header or an LLID header. An LT (length and type) header is two bytes in length. An LLID (length and GDS codepoint), is four bytes in length. In either type of header, the length bytes include the length of the header itself plus the length of the following information, if any. It should be noted that the ID portion of an LLID header is the GDS codepoint, which is a unique value in the computer system. The T portion of an LT header, on the other hand, must have a unique value only within the parent structure in which it occurs. The same T value may be used by unrelated child structures where whose child structures occur in different parent structures.

Length-bounded LLID structures may be segmentable or non-segmentable. For segmentable structures, the most significant bit of the LL bytes indicates whether any particular segment is the last. The ID bytes of a segmentable structure are present on the first segment only.

An atomic structure must always be length-bounded. A parent structure may be length-bounded, delimited or implied. A delimited parent structure is one having its beginning and ending defined by first and last length-bounded children structures known respectively as prefix and suffix delimiters. Children delimiters may consist only of an LT or LLID header.

An implied parent structure is one whose boundaries are implied from the existence and order of certain child structures. An implied parent structure lacks any header of its own or any prefix or suffix child delimiters.

The use of registered GDS codepoints permits an indefinite variety of message formats to be designed. Each format can itself have considerable variety as to the number of possible, different messages that can be generated.

One of the functions that is performed by at least certain nodes in a computer network is the testing of received messages to determine whether the have been incorrectly composed; ie, certain format errors such as missing fields, incorrectly ordered fields, excessively long fields, etc.

In reporting errors that are found, it is not enough to simply report that an error has been found somewhere in a message. Messages can be so long and complex that a network operator would require considerable time and effort to isolate errors reported in such a general way. For an error report to be useful to a network operator, the report must specify how a particular field in the particular message violates the design of the particular format.

Existing methods of reporting format errors do not make a clear distinction between the type of error and the particular format and fields involved. Typically, each known message format and fields involved. Typically, each known message format has a large number of defined error codes, each intended to direct a network operator to a particular field in a particular message. Typical error conditions would be "field xxx missing" or "too many xxx fields". The number of defined error codes normally greatly exceeds the number of fields since each field can be involved in a variety of error situations. For optimal error testing and reporting when using existing methods, an error code must exist for every possible error condition for every possible field in a message. It can be seen that the number of error conditions that must be defined can easily approach unmanageability.

Even if system designers were informed of every possible message format and given the opportunity to develop format testing logic specific to every format, different nodes in a network may be updated at different times. If an updated program provided to one node results in new fields being added to one or more existing messages, a "down-level" program running at a different node may be incapable of recognizing the new fields in messages received from the updated node. While it would be simple enough for the "down-level" node to always report an unrecognized field as a format error, such a response is not always desirable. The unrecognized field may not be critical at the testing node. Reporting it as a format error in every case could result in unnecessary message rejections, thereby degrading system performance.

An obvious alternative solution to the problem of testing messages for format errors would be to severely restrict the messages formats available to system designers and users. While the solution is obvious, so is its drawback; namely, that the system designer would no longer have the flexibility of designing a message that would optimally accomplish a desired task.

Therefore, the present invention is a system and method which permits the detection and reporting of format errors in a manner that is independent of the design of the particular message format and of the contents of the particular message. The invention has three essential elements: (1) rules for designing hierarchical formats that limit the variety of relationships among the fields in the formats but allow indefinite variety in the arrangement of GDS variables; (2) a formal tabular technique for expressing the design of any format; and (3) a general-purpose report structure that includes both a format-independent error code and a structure report identifying the particular format, message, and encoding structures involved. The type of error and the hierarchical location of that error are reported separately in the same error message.

The invention is practiced at one or more nodes in a data communications network wherein data messages are composed of hierarchical structures. Each received message is identified. A previously stored table unique to the identified message is retrieved. The table defines the hierarchy of the message and contains the allowable parameters for each structure which may be contained in the message. The message is decomposed using general purpose parsing logic and the retrieved table to identify each structure contained in the message and to determine whether the parameters of the identified structure satisfy the format definitions found in the retrieved table. An error report is generated if an error is found. The error report contains a format-independent error code indicating the type of error found and a hierarchical report setting forth the hierarchy of the structure in which the error was found.

Details of a preferred embodiment of the invention may be more readily ascertained from the following technical description when read in conjunction with the accompanying drawings wherein:

Figure 1 is a simplified block diagram of a data communications network in which the present invention may be implemented;

Figure 2 is a partial schematic representation of the type of message that can be processed by the present invention;

Figure 3 is an example of a tabular definition for a particular message;

Figure 4 is a relatively high-level flow chart of steps performed in practicing the present invention;

Figure 5, consisting of figures 5A, 5B and 5C taken together, is a flow chart of general purpose parsing logic for use in decomposing messages in accordance with the present invention;

Figure 6, consisting of figures 6A and 6B taken together, is a flow chart of format error checking steps performed in accordance with the present invention;

Figure 7 is one example of an error report that is generated as a result of use of the present invention; and

Figure 8 is a second example of an error report that is generated as a result of use of the present invention.

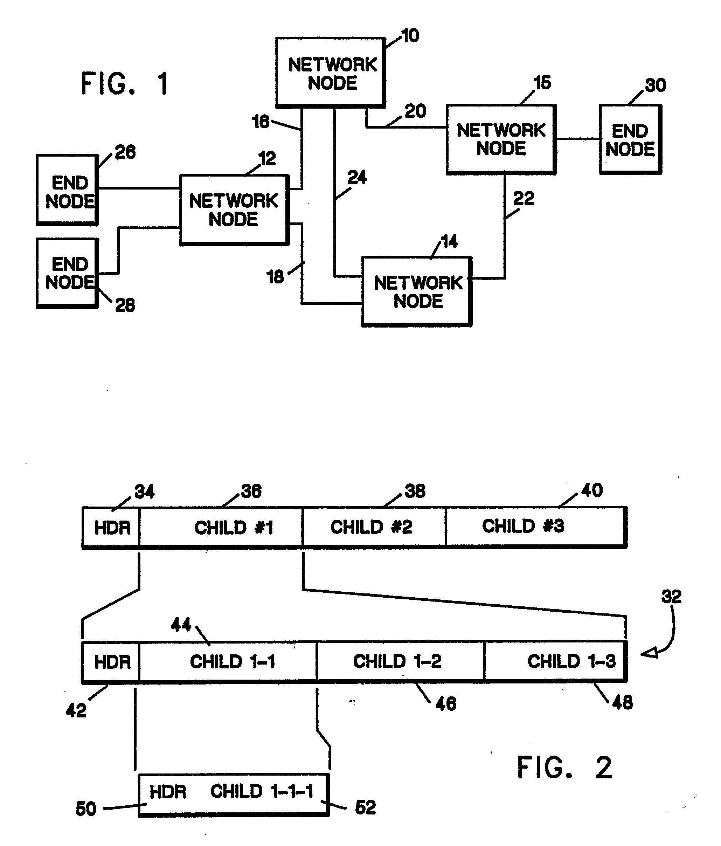

Referring to figure 1, a simple data communications network is shown as having three network nodes 10, 12, 14 and 15 interconnected through a number of communications links 16, 18, 20, 22 and 24. As noted earlier, the network nodes provide a number of services which allow users at end nodes, such as end nodes 26, 28 and 30 to exchange information in the form of data messages.

A greatly simplified data message is shown in figure 2. The message consists of a primary parent structure 32. If the primary parent structure is a length-bounded structure, the structure would also include either a two byte LT header or a four byte LLID header 34. The LLID header would include the GDS codepoint registered for the message. The primary parent structure is shown as including three child structures 36, 38 and 40.

Child structure 36 is expanded to show that it includes three child structures 44, 46 and 48 of its own. Like the primary parent structure 32, child structure 36 includes an LT of LLID header 42 if it is a length bounded structure. Structure 36 is a child to the primary parent structure 32 but is also a parent to child structures 44, 46 and 48. Structure 44 is expanded to show that it is an atomic structure, which includes no other structures. Any atomic structure is length-bounded and must include either an LT or LLID header 50 along with a data field 52.

In implementing the present invention, certain relationships between parent and child structures must exist. An LLID parent structure must contain all LLID or all LT children; that is, intermixed LLID and LT siblings are not permitted. An LT parent structure cannot include LLID child structures. LT structures must have an LLID ancestor within the format. Unrecognized children of implied parents are allowable only if three conditions are met. First, the structure's children must not be changeable at intermediate nodes. Second, the order in which children are received must be preserved. Third, the unrecognized structure must occur before the last required child of the implied parent structure.

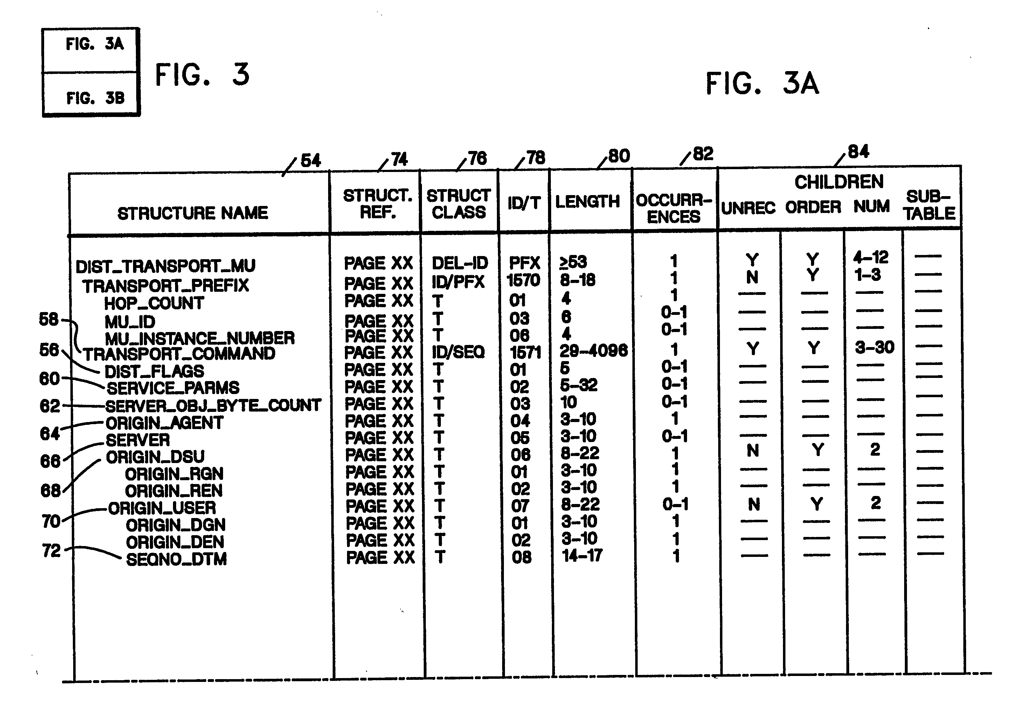

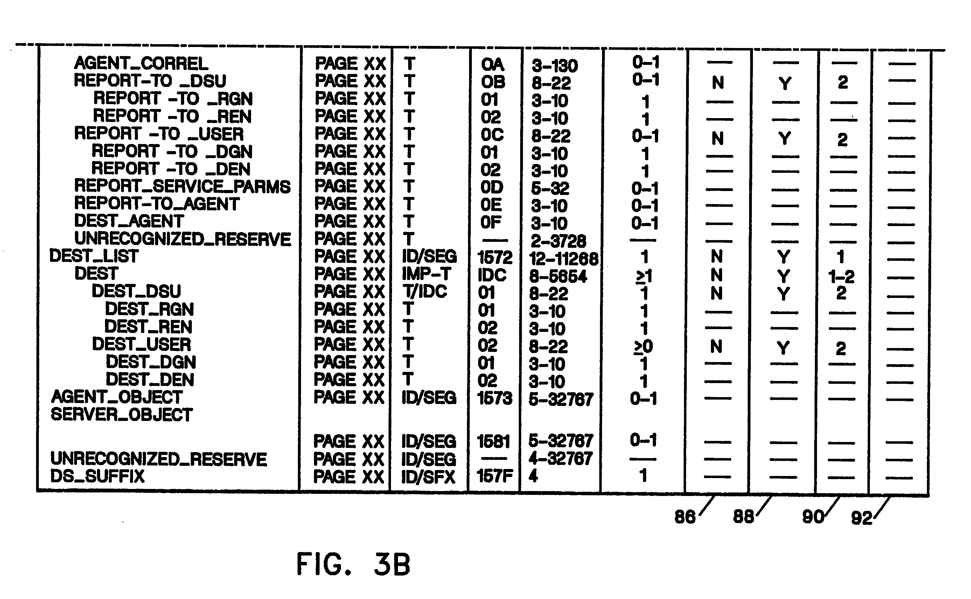

The present invention requires that each message format be defined in a Format Definition Table of the type illustrated in Figure 3, which is a tabular definition of the Distribution Transport Message Unit employed in SNA networks. In practice, a Format Definition Table exists in two forms, a hard copy or printed form which can be used by used by system programmers and a soft copy or machine readable form which is stored at each node in a network which is to perform a format error checking function. The following description is directed to the printed form of the table. Where there are substantial differences between the printed form and the machine readable form stored at a node, these are noted in the text.

Each row in the table defines a single structure identified by the Structure Name appearing in the first column 54. The hierarchical relationship between the various structures in the table is indicated by the relative identation of the various Structure Names. Child structures with Names having the same indentation are siblings. For example, the structure DIST_FLAGS 56 is a child to the structure TRANSPORT__COMMAND 58 as indicated by the relative indentation of the two structure names. Structure 56 is, at the same time, a sibling of structures 60, 62, 64, 66, 68, 70 and 72 among others.

Column 74 of the table is a Structure Reference which would appear in printed copies of the table. The Structure Reference can be used as an index to published format and protocol reference manuals or transaction programmer's reference manuals in which more detailed information can be found as to each of the structures listed in the table. The Structure Reference is included as a convenience to system users. It is no essential to an understanding of the present invention and need not be present in the machine-readable version of the table stored at network nodes.

Column 76 of the table specifies the Structure Class for each structure in the format. As noted earlier, structures can be classified as length-bounded LLID, length-bounded LT, delimited LLID (Del-ID), delimited LT (Del-T), implied LLID (Imp-ID) or implied LT (Imp-T) structures. In the table, a length-bounded structure is assumed if only an ID or T value is specified. Only delimited and implied structures are expressly identified as such.

A structure classified as delimited must contain at least two required, length-bounded children that act as the prefix (pfx) and suffix (sfx) of the delimited structure. The "/pfx" notation denotes the length-bounded child structure which serves as the prefix for its parent delimited structure. The "sfx" notation denotes the length-bounded child structure which serves as the suffix.

An implied structure uses an identified child to identify the beginning of a sequence of children. The "/idc" notation indicates the length-bounded structure which serves as an identifier child for its parent implied structure.

If segmentation is allowed for a particular structure, a "/seg" notation will appear in the Structure Class column.

Column 78 of the table contains a hexadecimal representation of the ID (GDS codepoint) or T-(Type) value that appears in the header. To indicate that a delimited parent structure is identified by its prefix, the notation "pfx" is used. To indicate that an implied structure is identified by one of its children, the notation "idc" for identified child is used.

Column 80 of the table specifies the maximum and minimum lengths that would be appropriate for each structure. For structures which allow unrecognized children, the maximum length value accommodates the possibility of these yet-to-be-defined structures.

Column 82 sets forth the minimum and maximum number of times a given structure may occur in the defined format. A specified value of "1-n" indicates that the structure must occur at least once but no more than "n" times. A specified value of "0-n" indicates the structure need not occur at all, but must not occur more than "n" times if it does occur. A specified value of ">n" simply indicates there is no defined maximum number of times the structure may occur. If a single digit, normally a one, appears in column 82, then that structure must appear exactly the number of times specified by the digit.

The format definition table may also specify certain relationships between a parent structure and its child structures in a number of subcolumns under a general column heading 84. A structure which tolerates unrecognized child structures is denoted by a "Y" entry in the "Unrec" sub-column 86. A structure which does not tolerate such child structures is denoted by a "N" entry. The lack of either such entry indicates the specification is not applicable for the particular structure. This is true of all atomic structures as such structures, by definition, cannot include child structures.

Subcolumn 88 is an Order column that is applicable only to parent structures. A value of "Y" in this subcolumn indicates that child structures for the parent must appear in the defined order. A value of "N" indicates the child structures can appear in other than the defined order. The lack of either entry indicates the specification is inapplicable for the particular structure.

Subcolumn 90 is a Num column that specifies the minimum and maximum numbers of different child structures that may appear in a given parent structure. The maximum number accounts for both recognized and unrecognized child structures, assuming the latter are allowed within the parent structure.

Subcolumn 92 is a pointer to subtables that may be used to describe child structures that are common to more than one parent structure. The use of subtables permits tables to be defined in print with a minimum of redundant entries. The subtable column would probably not be included in any machine readable version of the table stored at a network node.

Machine-readable versions of format definition tables such as the one described above are used in conjunction with general purposes parsing logic at network nodes to decompose received messages and to check those messages for format errors.

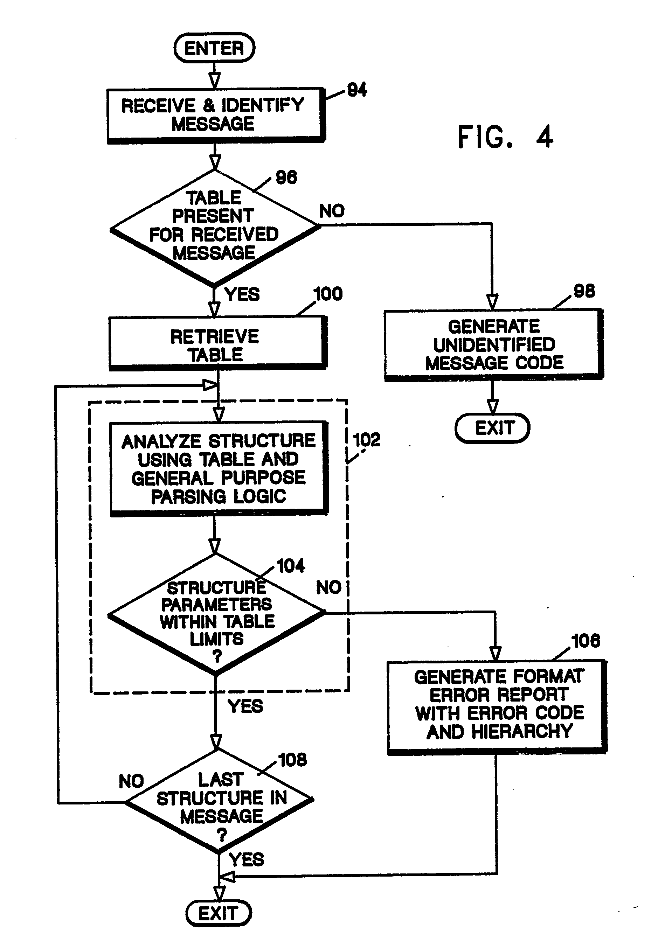

Figure 4 is a relatively high level flow chart of the steps performed at a network node when performing a format error checking function. A node performing format tests must receive and identify the message (block 94) using the ID or GDS codepoint for the primary parent structure. The node checks (block 96) to determine whether it contains a machine-readable definition (table) for the identified message if no table is found (block 98), an "unidentified message" error code is generated. No further format checking is performed.

If operation 96 is indicated a stored table exists for the identified message, the table is retrieved in operation 100. Information in the table may then be used in conjunction with general purpose parsing logic to identify and analyse each structure in the message (block 102). As an integral part of the message decomposition, a determination (block 104) is made whether the parameters of each structure in the message fall within the limits specified by the table. If a format error is found, a format error report is generated (block 106). The format error report generates an error code representing the type of error. The report also sets forth the hierarchy of the structure in which the error is found. More information about the error is provided below. Once the first format error is detected and reported for a message, no further format checking is performed since the message cannot reliably be used whether or not additional format errors exist.

If no format error is found in the current structure, a check (block 108) is then made as to whether more structures remain to be tested. Assuming no errors are found, the steps described about are repeated for each structure until all have been checked. The format error checking routine is then exited.

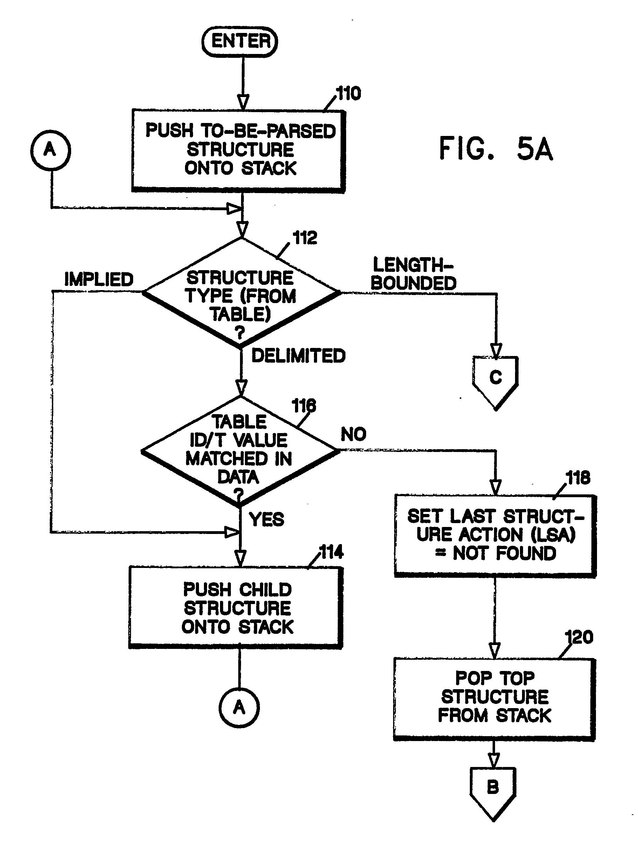

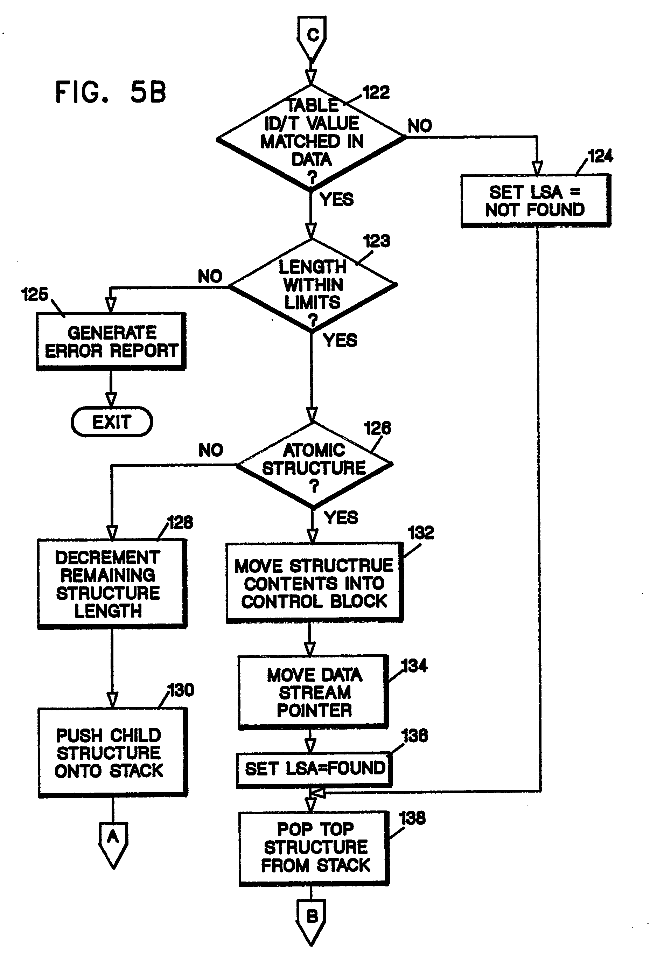

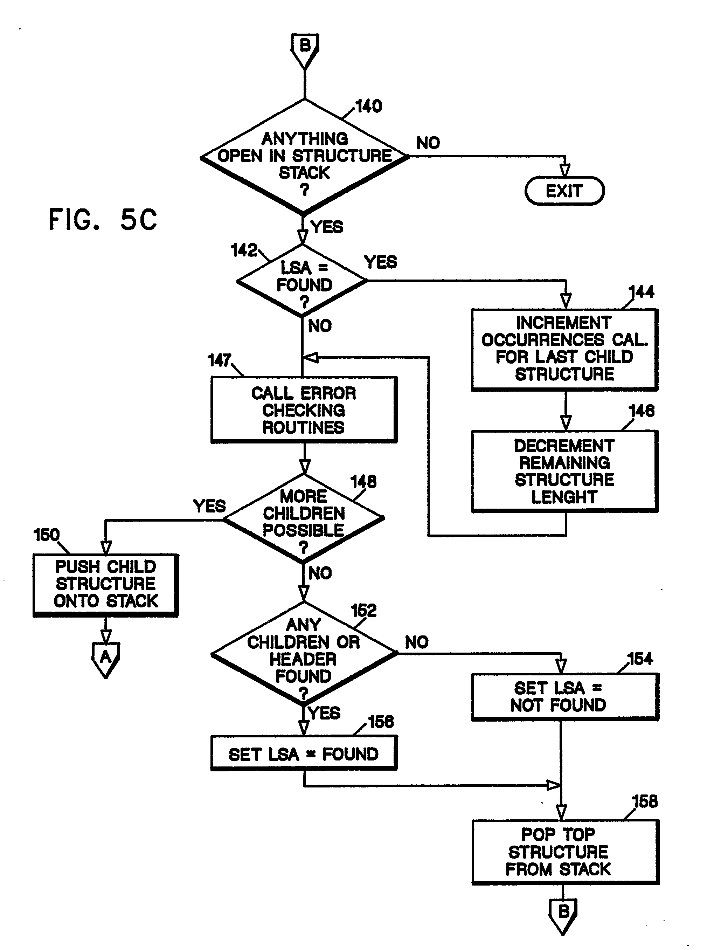

Figures 5A, 5B and 5C, taken together, define general purpose parsing and error checking logic that is used to decompose a received message to permit format error checks to be performed on its individual structures.

A to-be-parsed structure is pushed onto a stack (block 110) and the stored format definition table is used (block 112) to determine the type of the structure. If the structure is an implied structure (and therefore has no header of its own), its first child structure is pushed onto the stack (block 114). If the structure is delimited, the table is checked (block 116) to determine whether the stored ID/T value matches the actual ID/T value in the received message. Assuming a match is found, the first child structure of the delimited structure is pushed onto the stack.

If operation 116 does not find a match between the actual and the defined ID/T value for the structure, a LAST_STRUCTURE_ACTION or LSA variable is set (block 118) to a NOT_FOUND state. Depending on the tabular definition for the message, the NOT_FOUND state may or may not cause a format error report to be generated. Assuming a format error is not yet found, the top structure is then popped (block 120) from the stack so that the next structure may be checked.

If operation 112 indicates the current structure is a length-bounded structure, a check (block 122) is still made to determine whether the received ID/T value matches the ID/T value stored in the table. If a mismatch is found, the LSA variable is set to NOT_FOUND (block 124) and the process jumps to block 138. Whether or not a format error exists is determined later in the process.

If a match is found in operation 122, the length of the identified structure is compared to tabular values (block 123) to see if specified length limits are being exceeded. If length limits are being exceeded, a format error report is generated (block 125) and format error checking is terminated. If the structure length is within the specified limits, a further check (block 126) is made to determine whether the current structure is an atomic structure. If the current structure is not found to be an atomic structure, meaning that it includes at least one additional child structure, the remaining length of the structure is decremented (block 128) by the length of the current structure and the next child structure is pushed onto the stack (block 130). The logical steps beginning with operation 112 are repeated for the new child structure.

If the current structure is found to be an atomic structure by operation 126, the structure contents are moved into a control block in an operation 132. The data stream pointer is then moved (block 134) to the next structure in the message and the LSA variable for the atomic structure now in the control block is set to an FOUND state (block 136) to indicate the structure was found.

The top structure is popped from the stack (block 138) and a check (block 140) is made to see whether anything remains in the structure stack. If nothing remains, the format checking routine is exited.

If anything remains open in the structure stack and the Last Structure Action of LSA is found to be OK (block 142), the number of occurrences of the last child structure found is incremented (block 144) while the remaining structure length is decremented (block 146) by the length of the last child structure.

Whether or not the LSA variable is set to FOUND in operation 142, error checking routines are called (block 147) to test the structure for certain kinds of format errors. These error checking routines are described in more detail later. A check (block 148) is then made to determine whether there may be more children in the structure. If more children are possible, the next child structure is pushed onto the stack (block 150) and the steps beginning with operation 112 are repeated.

If check 148 indicates that more children are not possible, it is determined (block 152) whether any children or a header have been found. If none were found, the LSA variable is set (block 154) to a NOT_FOUND state. If children or a header were found, the LSA variable is set (block 156) to an FOUND state and the top structure is popped (block 158) from the stack.

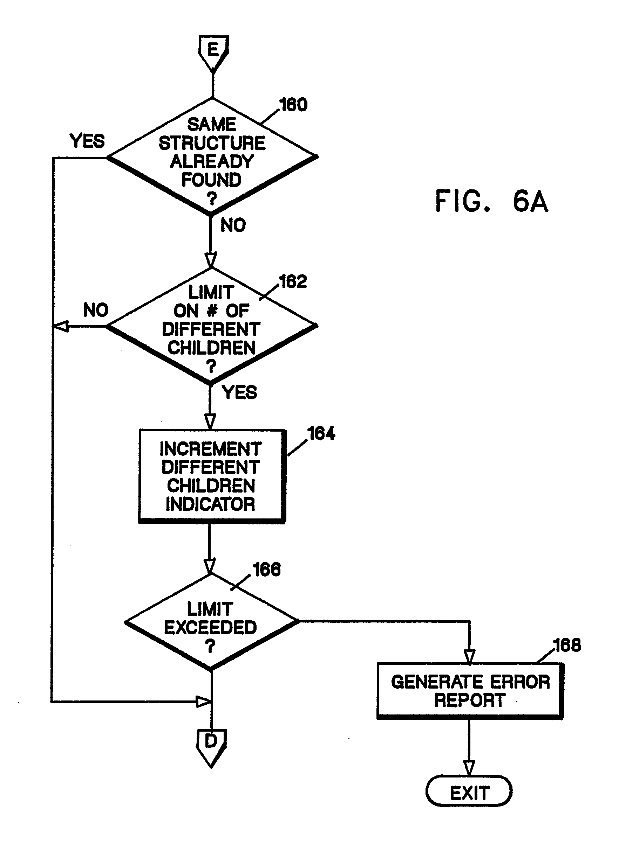

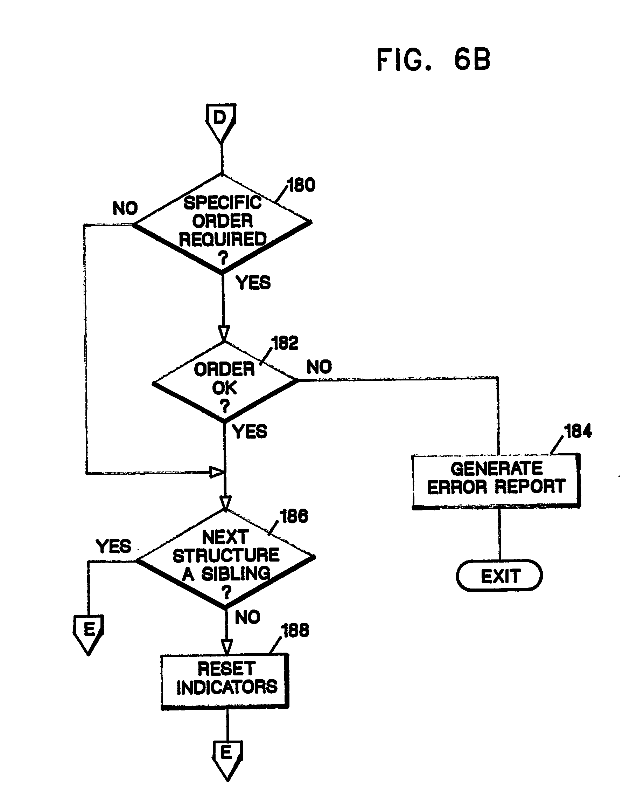

Figures 6A and 6B, taken together, exemplify steps that could be performed in the error checking routines called in operation 147. These steps check whether the structure parameters fall within acceptable limits. The steps are reiterated for each structure.

At the start of an iteration of the error checking routines, a check (block 160) is made to determine whether the current structure was previously found. If the same structure was not found previously, a further check (block 162) is necessary to determine whether the table specifies some upper limit on the number of different child structures that may occur in a given parent structure. If an upper limit exists, a "different children" counter is incremented (block 164) and the count is tested (block 166) to determine whether it exceeds the specified limit. If the specified limit has been exceeded, an appropriate error report is generated in an operation 168 before format checking is terminated.

Once the "different children" operations (160 through 168) are performed, a determination is made (block 180) as to whether children structures must appear in a specific order within the current parent structure. If a specific order is required, a check is made (block 182) to determine whether the structure order has been followed. If the current structure is out of a prescribed order, an error report is generated in an operation 184 and format checking is ended.

When the order checks are completed, the decomposed message is checked (block 186) to determine whether the next structure to be checked is a sibling to the current structure. If the next structure is a sibling, the operations beginning at block 160 are repeated for that sibling. If the next structure is not a sibling, all indicators are reset (block 188) since the next structure must be a different parent structure than the current parent structure.

In a system implementing the present invention, format errors are reported in a general purpose condition report message. This general purpose condition report isolates the type of error found from the location at which that error is found.

The location of the error (the structure in which the error is found) is identified in the context of GDS codepoints. Error location is specified by header identification plus class, instance, and position information for the particular structure and all of its pertinent ancestors. A more detailed description of the error location specification will be provided later in connection with specific examples of format error reports.

The type of format error is identified by a report code. Possible format error report codes are listed below. These error codes, in conjunction with the error location specification, provide an accurate indication of any format error.

0000 No specific code applies

0001 Required structure absent.

0002 Precluded structure present.

0003 Multiple occurrences of a non-repeatable structure.

0004 Excess occurrences of a repeatable structure

0005 Unrecognized structure present where precluded

0006 Length outside specific range. Used where length arithmetic balances.

0007 Length exception. Used where length arithmetic is out of balance.

0008 Required combination of structures absent.

0009 Precluded combination of structures present.

000A Required combination of structures and data values absent.

000B Precluded combination of structures and data values present.

000C Unknown or unsupported data value.

000D Incompatible data values.

000E Precluded character present.

000F Data value out of range.

0010 Segmentation present where precluded.

0011 Precluded data value.

0012 Recognized but unsupported structure.

0013 None of several possible structures found.

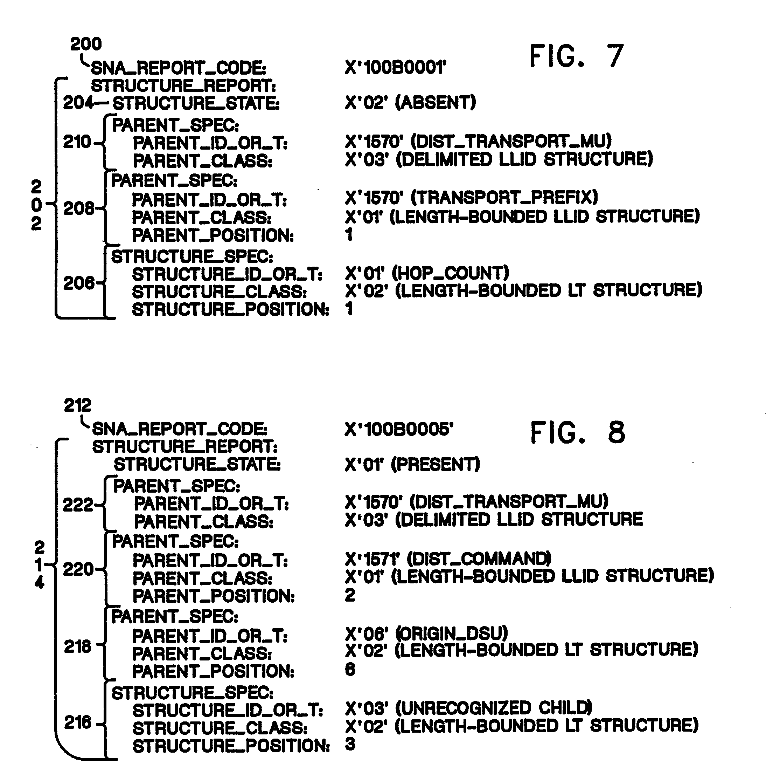

0014 Incorrect order of child structures found. Figure 7 is an SNA Condition Report that would be generated when a HOP_COUNT value is found to be absent from a Distribution Transport Message Unit or DTMU. A hop count is a required structure in a DTMU and is an indication of the number of links a message may have to traverse between a source node and its destination node. The exact meaning of the term is not important to this description.

It will be noted that the SNA Condition Report includes a SNA report code 200 with a four byte hexadecimal value of 10 0B 00 01. The first two bytes (10 0B) is a major code designating a format error. The last two bytes (00 01) is an error subcode designating a particular type of format error. As can be seen from the above list, subcode 00 01 indicates a required structure is absent.

The identity of the missing structure is established by the structure report 202. The structure report 202 has several components. Structure state 204 indicates that a structure is absent. In this case, the state indication 204 is redundant with the report code 200. In other cases, there will be no redundancy. The structure report 202 further includes a structure specification 206 specific to the structure found to have the format error. This structure specification includes the ID/T value (01) for the HOP_COUNT filed, the class (length-bounded LT) of the HOP_COUNT field and the position of the HOP_COUNT field within its parent structure.

The SNA Condition Report further includes ancestral information units 208 and 210 for establishing the hierarchy of the error location within the overall message. Unit 208 contains information identifying the immediate parent structure (TRANSPORT_PREFIX) for the HOP_COUNT field, including the class and position of the immediate parent structure. Unit 210 identifies the DIST_TRANSPORT_MU structure as the parent structure for the TRANSPORT_PREFIX structure.

Figure 8 is a second example of a SNA Condition Report generated as a result of a format error in a Distribution Transport Message Unit. This example illustrates an unrecognized child structure occurring within the ORIGIN_DSU structure, which precludes unrecognized children. It will be noted that the last four digits (00 05) of the SNA report code are indicative of an unrecognized structure being present where such structures are precluded by the format definition for the message.

The structure report 214 for the error message includes a unit 216 defining the particular structure in which the format error occurred, a unit 218 defining the immediate parent structure (ORIGIN_DSU) for the erroneous structure, a unit 220 defining the parent structure (DIST_COMMAND) for the ORIGIN_DSU parent structure and a unit 222 defining the parent structure (DIST_TRANSPORT_MU) for the DIST_COMMAND structure.

Two things can be noted from the specific examples given above. First, the type of error which occurs, as indicated by the SNA report code, is reported independently of the location at which the error occurs. Second, the location of the error is specified hierarchically. That is, the particular structure at which the error occurs is identified along with every parent structure in a direct line between that particular structure and the primary parent structure for the defined format.

While there has been described what is considered to be a preferred embodiment of the invention, variations and modifications therein will occur to those skilled in the art once they are made aware of the basic concepts of the invention. Therefore, it is intended that the appended claims shall be construed to include not only the preferred embodiment but all such variations and modifications as fall within the true spirit and scope of the invention.

## Claims

1. In a data communications network wherein messages are composed of hierarchical structures, a method for reporting message format errors in a format-independent manner, and being implemented in at least one network node receiving the message ; said method being characterized in that it comprises the steps of:
identifying the message,
retrieving a previously stored table as a function of the message identity, said table defining the hierarchy of the message and allowable parameters for each structure which may be contained in the message,
decomposing the message using general purpose parsing logic and the retrieved table to identify each structure contained in the message and to determine whether each identified structure satisfies allowable parameters set forth in the retrieved table, and
generating an error report if an error is found, said error report including a format-independent error code indicating the type of error found and a hierarchical report setting forth the hierarchy of the location in the message at which the error was found.

2. The method as defined in claim 1 wherein the step of generating a hierarchical report within an error report further comprises the steps of identifying the structure in which the format error was found and of identifying each parent structure which includes the structure at which the format error was found.

3. In a data communications network wherein messages are composed of hierarchical structures, a system for reporting message format errors in a format-independant manner, said system being characterized in that it comprises :
means for receiving a message,
means for identifying the received message,
means responsive to the identity of the received message for retrieving a format definition table which defines a hierarchy for the message and sets forth allowable parameters for each structure that may be included in the message,
means for decomposing the message to identify each structure contained in the message,
means for determining whether each identified structure contains parameters within a range of parameters set forth in the format definition table for each identified structure, and
means for generating an error report if an error is found, said report containing a format-independent error code indicating the type of error found and a hierarchical report setting forth the hierarchy of the structure in the message at which the error was found.

4. The system as set forth in claim 3 wherein the hierarchical report generated by said error report generating means identifies the structure at which the error was found and each parent structure which contains the structure at which the error was found.

FIG. 1

FIG. 2

FIG. 3A | FIG. 3B

FIG. 3

FIG. 3A

EP 0 394 174 A2

| STRUCTURE NAME | STRUCT. REF. | STRUCT CLASS | ID/T | LENGTH | OCCURR-ENCES | CHILDREN | | | SUB-TABLE |
|---|---|---|---|---|---|---|---|---|---|
| | | | | | | UNREC | ORDER | NUM | |
| DIST_TRANSPORT_MU | PAGE XX | DEL-ID | PFX | ≥53 | 1 | Y | Y | 4-12 | — |
| TRANSPORT_PREFIX | PAGE XX | ID/PFX | 1570 | 8-18 | 1 | N | Y | 1-3 | — |
| HOP_COUNT | PAGE XX | T | 01 | 4 | 1 | — | — | — | — |
| MU_ID | PAGE XX | T | 03 | 6 | 0-1 | — | — | — | — |
| MU_INSTANCE_NUMBER | PAGE XX | T | 06 | 4 | 0-1 | — | — | — | — |
| TRANSPORT_COMMAND | PAGE XX | ID/SEQ | 1571 | 29-4096 | 1 | Y | Y | 3-30 | — |
| DIST_FLAGS | PAGE XX | T | 01 | 5 | 0-1 | — | — | — | — |
| SERVICE_PARMS | PAGE XX | T | 02 | 5-32 | 0-1 | — | — | — | — |
| SERVER_OBJ_BYTE_COUNT | PAGE XX | T | 03 | 10 | 0-1 | — | — | — | — |
| ORIGIN_AGENT | PAGE XX | T | 04 | 3-10 | 1 | — | — | — | — |
| SERVER | PAGE XX | T | 05 | 3-10 | 0-1 | — | — | — | — |
| ORIGIN_DSU | PAGE XX | T | 06 | 8-22 | 1 | N | Y | 2 | — |
| ORIGIN_RGN | PAGE XX | T | 01 | 3-10 | 1 | — | — | — | — |
| ORIGIN_REN | PAGE XX | T | 02 | 3-10 | 1 | — | Y | — | — |
| ORIGIN_USER | PAGE XX | T | 07 | 8-22 | 0-1 | N | Y | 2 | — |
| ORIGIN_DGN | PAGE XX | T | 01 | 3-10 | 1 | — | — | — | — |
| ORIGIN_DEN | PAGE XX | T | 02 | 3-10 | 1 | — | — | — | — |
| SEQNO_DTM | PAGE XX | T | 08 | 14-17 | 1 | — | — | — | — |

| | PAGE | Type | Code | Range | Occur | 86 | 88 | 90 | 92 |
|---|---|---|---|---|---|---|---|---|---|
| AGENT_CORREL | PAGE XX | T | 0A | 3-130 | 0-1 | — | — | — | — |
| REPORT-TO _DSU | PAGE XX | T | 0B | 8-22 | 0-1 | N | Y | 2 | — |
| REPORT -TO _RGN | PAGE XX | T | 01 | 3-10 | 1 | — | — | — | — |
| REPORT -TO _REN | PAGE XX | T | 02 | 3-10 | 1 | — | — | — | — |
| REPORT -TO _USER | PAGE XX | T | 0C | 8-22 | 0-1 | N | Y | 2 | — |
| REPORT -TO _DGN | PAGE XX | T | 01 | 3-10 | 1 | — | — | — | — |
| REPORT -TO _DEN | PAGE XX | T | 02 | 3-10 | 1 | — | — | — | — |
| REPORT_SERVICE_PARMS | PAGE XX | T | 0D | 5-32 | 0-1 | — | — | — | — |
| REPORT-TO_AGENT | PAGE XX | T | 0E | 3-10 | 0-1 | — | — | — | — |
| DEST_AGENT | PAGE XX | T | 0F | 3-10 | 0-1 | — | — | — | — |
| UNRECOGNIZED_RESERVE | PAGE XX | T | — | 2-3728 | — | — | — | — | — |
| DEST_LIST | PAGE XX | ID/SEG | 1572 | 12-11268 | 1 | N | Y | 1 | — |
| DEST | PAGE XX | IMP-T | IDC | 8-5654 | $\geq 1$ | N | Y | 1-2 | — |
| DEST_DSU | PAGE XX | T/IDC | 01 | 8-22 | 1 | N | Y | 2 | — |
| DEST_RGN | PAGE XX | T | 01 | 3-10 | 1 | — | — | — | — |
| DEST_REN | PAGE XX | T | 02 | 3-10 | 1 | — | — | — | — |
| DEST_USER | PAGE XX | T | 02 | 8-22 | $\geq 0$ | N | Y | 2 | — |
| DEST_DGN | PAGE XX | T | 01 | 3-10 | 1 | — | — | — | — |
| DEST_DEN | PAGE XX | T | 02 | 3-10 | 1 | — | — | — | — |
| AGENT_OBJECT | PAGE XX | ID/SEG | 1573 | 5-32767 | 0-1 | — | — | — | — |
| SERVER_OBJECT | PAGE XX | ID/SEG | 1581 | 5-32767 | 0-1 | — | — | — | — |
| UNRECOGNIZED_RESERVE | PAGE XX | ID/SEG | — | 4-32767 | — | — | — | — | — |
| DS_SUFFIX | PAGE XX | ID/SFX | 157F | 4 | 1 | — | — | — | — |

86  88  90  92

FIG. 3B

EP 0 394 174 A2

FIG. 4

ENTER

RECEIVE & IDENTIFY MESSAGE — 94

TABLE PRESENT FOR RECEIVED MESSAGE — 96

NO → GENERATE UNIDENTIFIED MESSAGE CODE — 98 → EXIT

YES

RETRIEVE TABLE — 100

ANALYZE STRUCTURE USING TABLE AND GENERAL PURPOSE PARSING LOGIC — 102

STRUCTURE PARAMETERS WITHIN TABLE LIMITS ? — 104

NO → GENERATE FORMAT ERROR REPORT WITH ERROR CODE AND HIERARCHY — 106

YES

LAST STRUCTURE IN MESSAGE ? — 108

NO

YES

EXIT

FIG. 5A

Flowchart:

ENTER →

110 PUSH TO-BE-PARSED STRUCTURE ONTO STACK

(A) →

112 STRUCTURE TYPE (FROM TABLE) ?
- IMPLIED →
- LENGTH-BOUNDED → C
- DELIMITED →

116 TABLE ID/T VALUE MATCHED IN DATA ?
- NO → 118 SET LAST STRUCTURE ACTION (LSA) = NOT FOUND → 120 POP TOP STRUCTURE FROM STACK → B
- YES → 114 PUSH CHILD STRUCTURE ONTO STACK → (A)

**FIG. 5B**

FIG. 5C

FIG. 6A

```
                    ┌E┐

              160
         SAME
YES    STRUCTURE
       ALREADY
        FOUND
          ?
          NO

              162
         LIMIT
NO      ON # OF
       DIFFERENT
       CHILDREN
          ?
         YES

         164
      INCREMENT
      DIFFERENT
      CHILDREN
      INDICATOR

         166
        LIMIT                    168
      EXCEEDED              GENERATE ERROR
          ?                    REPORT

         ┌D┐
                              ( EXIT )
```

RA989009

# FIG. 6B

## FIG. 7

200
SNA_REPORT_CODE:      X'100B0001'
STRUCTURE_REPORT:
204— STRUCTURE_STATE:      X'02' (ABSENT)

210
PARENT_SPEC:
   PARENT_ID_OR_T:      X'1570' (DIST_TRANSPORT_MU)
   PARENT_CLASS:      X'03' (DELIMITED LLID STRUCTURE)

208
PARENT_SPEC:
   PARENT_ID_OR_T:      X'1570' (TRANSPORT_PREFIX)
   PARENT_CLASS:      X'01' (LENGTH-BOUNDED LLID STRUCTURE)
   PARENT_POSITION:      1

202

206
STRUCTURE_SPEC:
   STRUCTURE_ID_OR_T:      X'01' (HOP_COUNT)
   STRUCTURE_CLASS:      X'02' (LENGTH-BOUNDED LT STRUCTURE)
   STRUCTURE_POSITION:      1

## FIG. 8

212
SNA_REPORT_CODE:      X'100B0005'
STRUCTURE_REPORT:
   STRUCTURE_STATE:      X'01' (PRESENT)

222
PARENT_SPEC:
   PARENT_ID_OR_T:      X'1570' (DIST_TRANSPORT_MU)
   PARENT_CLASS:      X'03' (DELIMITED LLID STRUCTURE

220
PARENT_SPEC:
   PARENT_ID_OR_T:      X'1571' (DIST_COMMAND)
   PARENT_CLASS:      X'01' (LENGTH-BOUNDED LLID STRUCTURE)
   PARENT_POSITION:      2

214

218
PARENT_SPEC:
   PARENT_ID_OR_T:      X'06' (ORIGIN_DSU)
   PARENT_CLASS:      X'02' (LENGTH-BOUNDED LT STRUCTURE)
   PARENT_POSITION:      6

216
STRUCTURE_SPEC:
   STRUCTURE_ID_OR_T:      X'03' (UNRECOGNIZED CHILD)
   STRUCTURE_CLASS:      X'02' (LENGTH-BOUNDED LT STRUCTURE)
   STRUCTURE_POSITION:      3

RA989009